# EUROPEAN PATENT APPLICATION

(11) **EP 4 700 997 A1**
(43) Date of publication of application: **25.02.2026**
(21) Application number: 23962951.2
(22) Date of filing: 29.12.2023
(51) Int. Cl.: H01R 13/52

(54) **WATERPROOF ELECTRONIC DEVICE**

(71) Applicant: Shenzhen Shokz Co., Ltd., Shenzhen, Guangdong 518108 (CN)
(72) Inventor: KE, Hao, Shenzhen, Guangdong 518108 (CN); LI, Chaowu, Shenzhen, Guangdong 518108 (CN); JIANG, Zhongqi, Shenzhen, Guangdong 518108 (CN); LI, Yongjian, Shenzhen, Guangdong 518108 (CN)
(74) Representative: Santarelli
(86) International application number: PCT/CN2023/143665
(87) International publication number: WO 2025/138277

(57) **Abstract**

This application provides a waterproof electronic device, including a main body and a cable assembly. The main body includes a housing, an electronic component, and a first protective sleeve. The housing includes a mounting hole, and the first protective sleeve at least partially covers the outer surface of the housing. The cable assembly includes a connector, a cable, and a second protective sleeve. One end of the connector is provided with a mounting portion, the mounting portion is inserted through the mounting hole, the connector is provided with a connection hole, the cable passes through the connection hole and connects with the electronic component, and the second protective sleeve at least partially covers the outer surface of the housing to abut against the first protective sleeve. The connection between the second protective sleeve and the first protective sleeve, the connection between the second protective sleeve and the connector, the connection between the second protective sleeve and the housing, the connection between the first protective sleeve and the housing, and the connection between the mounting hole and the mounting portion are sealed with sealant to enhance waterproof performance.

## Description

### Technical Field

This application relates to the technical field of waterproof devices, and particularly relates to a waterproof electronic device.

### Background of the Invention

With the rapid development of consumer electronic devices, electronic devices such as smart watches, smart glasses, and headphones have become part of people's lives. These electronic devices have various functions that can meet people's various needs in daily life and are applicable to multiple scenarios. In electronic devices, cables are typically used to connect various functional components to the circuit board to achieve corresponding functions. Among the many usage scenarios, some specific usage scenarios require electronic devices to have good waterproof performance, such as when users use electronic devices outdoors in the rain or while swimming.

Therefore, there is a need to design a waterproof electronic device with better waterproof performance to improve the waterproof effect at cable connection points.

### Summary of the Invention

In a first aspect, embodiments of this application provide a waterproof electronic device, including: a main body including: a housing, including a mounting hole, an electronic component, installed within the housing, and a first protective sleeve, at least partially covering an outer surface of the housing; and a cable assembly including: a connector, including a mounting portion at an end, the mounting portion being inserted through the mounting hole to connect with the housing, the connector including a through connection hole, a cable, passing through the connection hole to connect with the electronic component, and
a second protective sleeve, at least partially covering the cable and an outer surface of the connector, and at least partially covering the outer surface of the housing to abut against the first protective sleeve, the connector being partially covered by the second protective sleeve and partially covered by the housing, where sealing connections are respectively provided at a connection between the second protective sleeve and the first protective sleeve, between the second protective sleeve and the connector, between the second protective sleeve and the housing, between the first protective sleeve and the housing, and between the mounting hole of the housing and the mounting portion of the connector.

According to some embodiments of the present application, a length of the second protective sleeve covering the housing is greater than a length of a connection between the mounting hole and the mounting portion.

According to some embodiments of the present application, the housing further includes a water blocking portion, the water blocking portion is located at an end of the mounting hole and is spaced apart from the mounting portion, a side of the water blocking portion facing the mounting portion includes at least one first sealant groove, and a sealant fills between the water blocking portion and the mounting portion, where the water blocking portion includes a through hole, the cable passes through the through hole to connect with the electronic component after passing out from the connection hole, and the sealant between the water blocking portion and the mounting portion surrounds a portion of the cable located between the mounting portion and the water blocking portion.

According to some embodiments of the present application, each first sealant groove of the at least one first sealant groove is arranged around the through hole, and the at least one first sealant groove is distributed along a radial direction of the through hole.

According to some embodiments of the present application, a roughness of the outer surface of the housing is greater than a preset first threshold, and the first threshold includes a minimum roughness value required for secure adhesion of the sealant.

According to some embodiments of the present application, a roughness of an inner surface of the mounting hole and a roughness of an outer surface of the mounting portion are greater than the preset first threshold, and the first threshold includes the minimum roughness value required for secure adhesion of the sealant.

According to some embodiments of the present application, the connector further includes a protruding portion located at an end of the mounting portion away from the housing, the protruding portion protrudes outward relative to the mounting portion, when the connector is connected with the housing, the housing abuts against the protruding portion so as to seal between the housing and the protruding portion with the sealant.

According to some embodiments of the present application, the protruding portion includes a boss, the boss protrudes in a direction towards the housing, an end of the housing close to the protruding portion includes a recess, and the boss is inserted into the recess.

According to some embodiments of the present application, a side of the protruding portion facing the housing includes at least one second sealant groove, each second sealant groove of the at least one second sealant groove surrounds the mounting portion, and the at least one second sealant groove is distributed along a radial direction of the mounting portion.

According to some embodiments of the present application, at least one of the inner surface of the mounting hole and the outer surface of the mounting portion includes at least one third sealant groove, each third sealant groove of the at least one third sealant groove surrounds the mounting portion, and the at least one third sealant groove is distributed along an axial direction of the mounting portion.

According to some embodiments of the present application, a material of the connector is zinc metal.

In summary, the waterproof electronic device provided by this application has a connector between the cable and the housing, and the connector can cover the cable and sealingly connect with the housing, thereby adding a sealing connection between the connector and the housing on a water ingress path where external water enters the housing, extending the water ingress path to increase water ingress resistance and improve the waterproof effect of the waterproof electronic device. Meanwhile, on the water ingress path, the position of the sealing connection between the connector and the housing is located before a connection point between the cable and the housing, and through the reliable sealing between the connector and the housing, the waterproof performance at the connection point between the cable and the housing is improved, further enhancing the waterproof performance of the waterproof electronic device. Moreover, the second protective sleeve can at least partially cover the housing and further extend the water ingress path through the sealing connection with the housing, thereby further improving the waterproof performance.

### Brief Description of the Drawings

In order to more clearly illustrate the technical solutions in the embodiments of this specification, the drawings required for use in the description of the embodiments will be briefly introduced below. Obviously, the drawings described below are only some embodiments of this specification. For a person of ordinary skill in the art, other drawings can also be obtained based on these drawings without creative effort.
FIG. 1A shows a front view of a waterproof earphone provided according to some exemplary embodiments in this application;
FIG. 1B shows a side view of a waterproof earphone provided according to some exemplary embodiments in this application;
FIG. 2 shows an exploded structural schematic diagram of a waterproof earphone provided according to some exemplary embodiments in this application;
FIG. 3 shows a structural schematic diagram of a connector of a cable assembly according to some exemplary embodiments in this application; and
FIG. 4 shows a cross-sectional view A-A of a main body of a waterproof headphone described in FIG. 1 of this application.

### Detailed Description of Embodiments

The following description provides specific application scenarios and requirements of this specification, with the purpose of enabling a person skilled in the art to manufacture and use the content in this specification. For a person skilled in the art, various local modifications to the disclosed embodiments are obvious, and the general principles defined herein can be applied to other embodiments and applications without departing from the spirit and scope of this specification. Therefore, this specification is not limited to the illustrated embodiments, but is accorded the widest scope consistent with the claims.

The terminology used herein is for the purpose of describing specific example embodiments only and is not limiting. For example, unless the context clearly indicates otherwise, the singular forms "a," "an," and "the" used herein may also include plural forms. When used in this specification, the terms "include," "comprise," and/or "contain" mean that the associated integers, steps, operations, elements and/or components are present, but do not exclude the presence of one or more other features, integers, steps, operations, elements, components and/or groups or that other features, integers, steps, operations, elements, components and/or groups can be added to the system/method.

In this application, "X includes at least one of A, B, or C" means that X includes at least A (X includes at least A), or X includes at least B (X includes at least B), or X includes at least C (X includes at least C). That is to say, X may only include any combination of A, B, C, or simultaneously include any combination of A, B, C as well as other possible content/elements. The any combination of A, B, C can be A, B, C, AB, AC, BC, or ABC.

In this application, unless explicitly stated, the associative relationships between structures can be either direct associative relationships or indirect associative relationships. For example, when describing "A is connected to B," unless it is explicitly stated that A is directly connected to B, it should be understood that A can be directly connected to B or indirectly connected to B; for another example, when describing "A is above B," unless it is explicitly stated that A is directly above B (A and B are adjacent and A is above B), it should be understood that A can be directly above B, or A can be indirectly above B (there are other elements between A and B, and A is above B), and so forth.

Considering the following description, these features and other features of this specification, as well as the operation and functions of related elements of the structure, and the economy of combination and manufacturing of components can be significantly improved. The description also includes all references to graphics and text in the drawings in this specification, all of which form part of this specification. However, it should be clearly understood that the drawings are for illustration and description purposes only and are not intended to limit the scope of this specification. It should also be understood that the drawings are not drawn to scale.

When users use electronic devices outdoors in the rain or while swimming, water enters electronic components such as circuit boards through gaps in the cable, damaging the electronic device. In the prior art, water penetration into cable gaps is prevented by creating a sealed connection between the cable and the electronic device. The sealed connection between the cable and the electronic device is achieved through adhesive bonding between the protective layer on the cable surface and the housing of the electronic device. However, cable surfaces are typically covered with protective layers, such as rubber, plastic, coating, silicone gel, and various fiber product protective layers, which have non-adhesive characteristics. Therefore, the bonding effect between the protective layer on the cable surface and the housing of the electronic device is poor, resulting in poor waterproof performance of the electronic device.

In view of this, this application provides a waterproof electronic device, replacing the bonding between the cable protective layer and the electronic device housing with bonding between a connector that covers the cable and the electronic device housing, thereby improving the bonding effect and further enhancing the waterproof performance of the waterproof electronic device.

The waterproof electronic device can be an electronic device with waterproof function. The electronic device can be a device composed of electronic components such as integrated circuits, transistors, and electron tubes, which functions by applying electronic technology (including software). The waterproof electronic device can include wearable devices such as smart watches, smart glasses, and headphones. For convenience of presentation, the following content uses a waterproof electronic device as a headphone as an example for illustration. It should be noted that a person skilled in the art should understand that waterproof electronic devices being other electronic devices are also within the protection scope of this specification.

The waterproof headphone can be any form of headphone. For example, the waterproof headphone can be a wired headphone. The receiver in a wired headphone can receive electrical signals sent from a media player through wired transmission, thereby converting the electrical signals into sound waves audible to human ears. For instance, the waterproof headphone can be a wireless headphone. The receiver in a wireless headphone can receive electrical signals sent from a media player through wireless transmission, thereby converting the electrical signals into sound waves audible to human ears. The waterproof headphone can be an air conduction headphone. An air conduction headphone can convert electrical signals into air vibration signals. The air vibration signals can be transmitted to the ear canal of the ear. The eardrum in the ear can convert the air vibration signals into sound. For another example, the waterproof headphone can be a bone conduction headphone. A bone conduction headphone can convert electrical signals into mechanical vibration signals. The mechanical vibration signals can cause vibration of the skull, making the perilymph produce fluctuations of the same frequency and stimulating the spiral organ of the cochlea to produce hearing. For yet another example, the waterproof headphone can be a combination of an air conduction headphone and a bone conduction headphone. In some embodiments, the waterproof headphone may also include a data storage unit. In this case, the waterproof headphone can operate independently of external media players and can play audio data stored in the built-in data storage unit even when not transmitting signals with external media players. This specification does not limit the type of waterproof headphone.

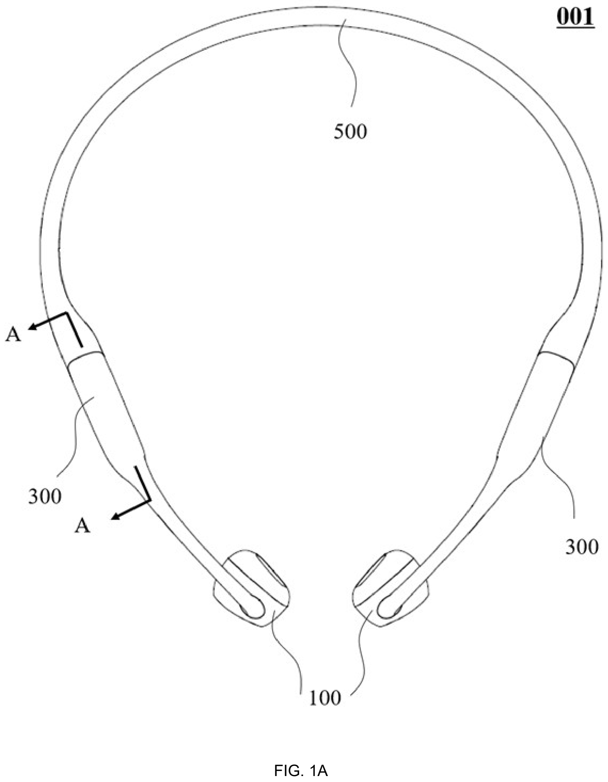

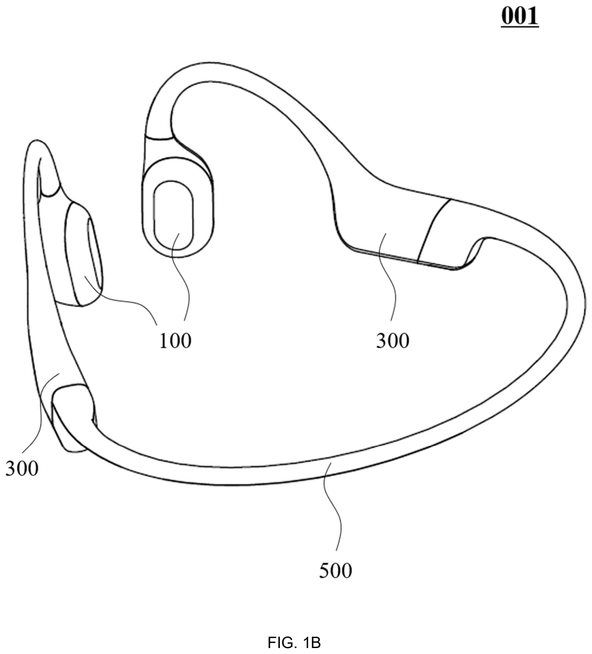

As mentioned above, the waterproof electronic device can be a waterproof headphone. FIG. 1A shows a front view of a waterproof headphone 001 provided according to some exemplary embodiments in this application; FIG. 1B shows a side view of the waterproof headphone 001 provided according to some exemplary embodiments in this application. The waterproof headphone 001 includes a main body 300 and a cable assembly 500. In some embodiments, the waterproof headphone 001 also includes a core unit 100.

In some embodiments, core unit 100 may also be referred to as a speaker assembly. Core unit 100 can convert electrical signals into sound waves audible to humans. The number of core units 100 can be one or two. When there is one core unit 100, the waterproof headphone 001 can be suitable for application scenarios where stereo requirements are not particularly high, such as hearing aids for hearing patients, teleprompters for hosts during live broadcasts, etc. When a user wears the waterproof headphone 001, core unit 100 can be worn on the user's left ear or on the user's right ear. When there are two core units 100 and the user wears the waterproof headphone 001, the two core units 100 are respectively worn on the user's different ears. In this case, both core units 100 can produce sound, thereby providing the waterproof headphone 001 with stereo sound effects and improving user satisfaction with the waterproof headphone 001. In some embodiments, the two core units 100 can be independently configured. That is, the two core units 100 can exist independently and can be worn separately. For example, the two core units 100 can be worn on different ears respectively, or worn on different users' ears respectively, making the use of the waterproof headphone 001 more flexible. At this time, the two core units 100 can work independently. In some embodiments, the two core units 100 can also be connected together (for example, connected together through cable assembly 500). At this time, the two core units 100 can work simultaneously and can achieve unified control to obtain better sound effects. In some embodiments, core unit 100 can be an air conduction core unit. At this time, when the user wears the waterproof headphone 001, core unit 100 can be in-ear type or open type. In some embodiments, core unit 100 can also be a bone conduction core unit. In this case, when the user wears the waterproof headphone 001, core unit 100 can be hung on the outside of the user's ear. For example, core unit 100 can be hung on the outside of the ear and close to human skin to transmit sound waves to the inside of the ear through vibration of human skin and bones. In some embodiments, core unit 100 can be a combination of an air conduction core unit and a bone conduction core unit.

The main body 300 can be electrically connected to core unit 100 to achieve control of core unit 100. In the waterproof headphone 001, the main body 300 can be the ear hook assembly of the waterproof headphone 001. In some embodiments, the main body 300 can receive electrical signals sent by external media players and send the electrical signals to core unit 100. In some embodiments, the main body 300 can have a built-in data storage unit. At this time, the main body 300 can send audio data from the built-in data storage unit to core unit 100. The number of main bodies 300 can be one or more. In some embodiments, each core unit 100 can be connected to one main body 300. In some embodiments, the waterproof electronic device is a waterproof headphone 001, and the waterproof headphone 001 can have two core units 100, where the two core units 100 can share one main body 300. When the waterproof headphone 001 includes two core units 100 and two main bodies 300, the two core units 100 are respectively electrically connected to the two main bodies 300. At this time, the two main bodies 300 can be independently configured to independently achieve control of core unit 100. The two main bodies 300 can also be connected together, for example, by connecting the two main bodies 300 together through cable assembly 500 to achieve unified control of the two core units 100.

In some embodiments, the waterproof headphone 001 may also include a cable assembly 500. The cable assembly 500 can connect two core units 100. In the waterproof headphone 001, the cable assembly 500 can be the neck cable assembly of the waterproof headphone 001. For example, when two core units 100 are respectively electrically connected to two main bodies 300, the cable assembly 500 can electrically connect the two main bodies 300. For another example, when two core units 100 share one main body 300, the main body 300 can be positioned close to either one of the two core units 100, and the cable assembly 500 can electrically connect the main body 300 with the other one of the two core units 100.

The cable assembly 500 can be any component capable of conducting electrical connection between various electronic components. The cable assembly 500 is mainly used to achieve electrical connections between various electronic components of the waterproof headphone 001. For example, when two core units 100 are respectively electrically connected to two main bodies 300, the cable assembly 500 can electrically connect the two main bodies 300. In another example, when two core units 100 share one main body 300, the main body 300 can be positioned close to either one of the two core units 100, and the cable assembly 500 can electrically connect the main body 300 with the other core unit 100.

It should be noted that the connection point between core unit 100 and main body 300 can also be sealed and connected with a sealant (sealing adhesive) to improve the waterproof performance of the waterproof headphone 001. Similarly, the connection point between main body 300 and cable assembly 500 can also be sealed and connected with sealant to improve the waterproof performance of the waterproof headphone 001.

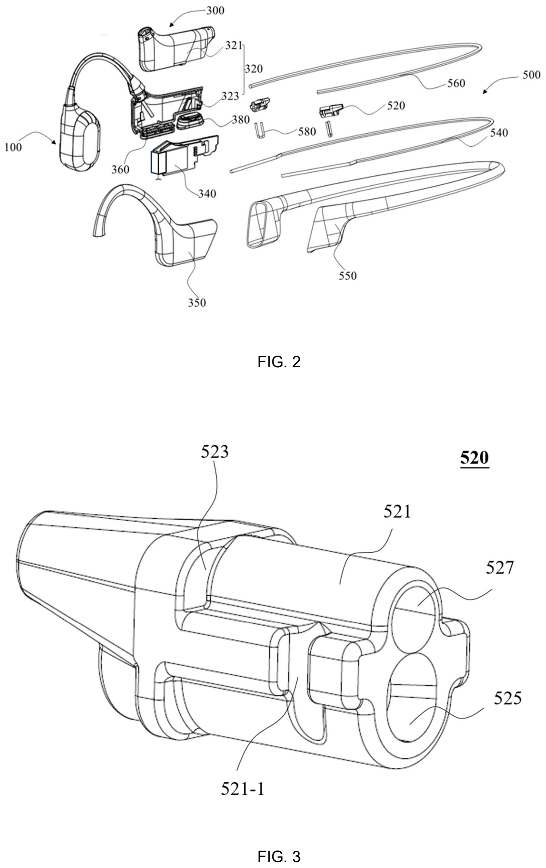

FIG. 2 shows an exploded structural schematic diagram of a waterproof headphone 001 provided according to some exemplary embodiments in this application. As shown in FIG. 2, the main body 300 includes a housing 320, an electronic component(s) 340, and a first protective sleeve 350.

The housing 320 can serve as a mounting base for the electronic component 340. The housing 320 can be a thin-walled, hollow shell-like structure. The electronic component 340 can be installed inside the housing 320. The shape of the housing 320 can be any shape to accommodate the installation of other components. The shape of the housing 320 can be ergonomic to facilitate user operation. The material of the housing 320 can be any material, such as metal, plastic, polymer, etc. This specification does not limit the shape or material of the housing 320.

In some embodiments, the housing 320 can be integrally formed. In some embodiments, the housing 320 can include at least two shells. For example, the housing 320 can include two shells, namely a main housing 321 and a housing cover 323. The main housing 321 and the housing cover 323 are assembled together to form a hollow shell structure. In some embodiments, the housing 320 can also be assembled from more than two shells, which will not be elaborated in this specification. The main housing 321 and the housing cover 323 are thin-walled components. The main housing 321 and the housing cover 323 can be assembled together to form an accommodation chamber inside. The accommodation chamber can house other components and allow them to be installed within it, providing protection and dust resistance for these components. For example, the electronic component 340 can be installed inside the housing 320, such as within the accommodation chamber. The connection between the main housing 321 and the housing cover 323 can be sealed with a sealant to enhance the waterproof performance of the housing 320.

The electronic component 340 can include a circuit board. The core unit 100 can be electrically connected to the circuit board. The electrical connection between the core unit 100 and the circuit board can be achieved through a cable assembly 500. The circuit board can control the core unit 100. The circuit board is an integrated chip circuit with headphone functionality. In some embodiments, the circuit board includes a radio frequency unit for receiving and transmitting signals, such as Bluetooth, NFC, Wi-Fi, or other communication components, to enable communication with an external media player. In some embodiments, the circuit board includes a CPU unit for processing data and a DSP unit for audio decoding. In some embodiments, the circuit board also includes a data storage unit to store audio data. The circuit board can be used for short-range wireless communication, audio transmission, data transmission, data storage, location services, device networking, and the like. This specification does not limit the type of circuit board. Specifically, the circuit board can include a flexible printed circuit (FPC), a printed circuit board (PCB), and a rigid-flex printed circuit board (Rigid-Flex PCB). That is, the circuit board can be any circuit or processor capable of performing one or more functions, or any combination thereof.

The main body 300 also includes a first protective sleeve 350. The first protective sleeve 350 at least partially covers the outer surface of the housing 320. In some embodiments, the first protective sleeve 350 can cover the entire outer surface of the housing 320. In some embodiments, the first protective sleeve 350 can cover a portion of the outer surface of the housing 320. When the first protective sleeve 350 covers a portion of the outer surface of the housing 320, the first protective sleeve 350 can cover the outer surface of the housing 320 near one end close to the core unit 100. In some embodiments, the first protective sleeve 350 can also cover the outer surface of a cable connecting the electronic component 340 to the core unit 100. In some embodiments, the first protective sleeve 350 can also cover the outer surface of the core unit 100. The first protective sleeve 350 can be sealed to the outer surfaces of the other components it covers using a sealant to enhance the waterproof performance of the headphone 001; for example, between the first protective sleeve 350 and the outer surface of the housing 320; as another example, between the first protective sleeve 350 and the outer surface of the cable connecting the electronic component 340 to the core unit 100.

The first protective sleeve 350 can be integrally formed or can be assembled from multiple protective covers. The first protective sleeve 350 can be injection-molded onto the outer periphery of the housing 320, or it can be separately injection-molded and then fitted onto the outer periphery of the housing 320. The first protective sleeve 350 can be made of a soft material with a certain degree of elasticity, such as soft silicone, rubber, or the like.

In some embodiments, the main body 300 can also include control buttons 360. The control buttons 360 can be mounted on the housing 320 and partially exposed outside the housing 320 for user operation. The control buttons 360 can be electrically connected to the circuit board. Users can operate the control buttons 360 to control the circuit board, thereby controlling the waterproof headphone 001 to perform functions such as turning on, turning off, adjusting volume, switching modes, and the like, enhancing the intelligence of the waterproof headphone 001 and improving the user experience.

In some embodiments, the main body 300 can also include a charging interface 380. The charging interface 380 can be mounted on the housing 320 and partially exposed outside the housing 320 to establish an electrical connection with an external power source. The charging interface 380 can be electrically connected to the circuit board to provide power to the circuit board. The power can be transmitted through the circuit board to other components, such as the core unit 100.

As mentioned earlier, the cable assembly 500 is electrically connected to the main body 300, enabling the circuit board of the main body 300 to establish electrical connections with various electronic components of the waterproof headphone 001. As shown in FIG. 2, the cable assembly 500 can electrically connect two main bodies 300. As shown in FIG. 2, the cable assembly 500 includes a connector 520, a cable 540, and a second protective sleeve 550. In some embodiments, the cable assembly 500 also includes an elastic metal wire 560. In some embodiments, the cable assembly 500 further includes a buckle 580.

The cable 540 can be any conductive wire, such as a conductor. The cable 540 can be used to establish electrical connections between various electronic components of an electronic device. Furthermore, the cable 540 can be used to establish electrical connections between various electronic components of the waterproof headphone 001. One end of the cable 540 can be electrically connected to the electronic component 340 of one of the two main bodies 300. The other end of the cable 540 can be electrically connected to the electronic component 340 of the other main body 300 or directly to the core unit 100. The cable 540 can consist of one or multiple strands. When multiple circuits in the waterproof headphone 001 require electrical connection, the cable 540 can be configured with multiple strands accordingly, for example, the cable 540 can be set to 1 strand, 2 strands, 3 strands, 5 strands, 6 strands, 8 strands, or any other number of strands.

The surface of the cable 540 is covered with a cable protective layer. The role of the cable protective layer is to protect the cable insulation layer during use, preventing mechanical damage and harm from various environmental factors such as water, sunlight, biological agents, fire, and the like, to maintain the cable's long-term stable electrical performance. Therefore, the cable protective layer has properties of chemical corrosion resistance and temperature resistance. The material of the cable protective layer can be various materials, such as rubber, plastic, coatings, silicone, and various fiber product protective layers. Furthermore, the plastic can be polytetrafluoroethylene (PTFE).

The connector 520 can be connected to the housing 320. The connector 520 can encase/cover the cable 540. The cable 540 can pass through the connector 520. Therefore, the connector 520 can serve as a medium for connecting the cable 540 to the housing 320. For example, when the cable 540 is electrically connected to the electronic component 340, the connector 520 can be connected to the housing 320 of the main body 300, and the cable 540 can pass through the connector 520, thereby entering the interior of the housing 320 to establish an electrical connection with the electronic component 340. In some embodiments, the connection between the cable 540 and the connector 520 can be sealed with a sealant.

The connection between the connector 520 and the housing 320 can be sealed with a sealant. As mentioned earlier, the surface of the cable 540 is covered with a cable protective layer. Due to the special material of the cable protective layer, its bonding reliability is relatively low when adhered to other components. Therefore, the waterproof headphone 001 encases the cable 540 with the connector 520, and the sealed connection between the connector 520 and the housing 320 replaces the direct sealant connection between the cable 540 and the housing 320, making the sealed connection between the cable assembly 500 and the main body 300 more reliable, thereby enhancing the waterproof performance. The forming process of the connector 520 can be any process, such as injection molding, stamping, or die-casting. Alternatively, it can involve 3D printing, machining, and so forth. The connector 520 can be formed separately and then further assembled with the housing 320. The material of the connector 520 can be metal to enhance the structural strength of the cable 540, thereby improving the connection strength between the cable 540 and the main body 300. The material of the connector 520 can be zinc, copper, aluminum, magnesium, lead, tin, lead-tin alloys, or their alloys. Furthermore, the material of the connector 520 can be a zinc alloy to simplify the forming process of the connector 520 and provide good environmental performance. Alternatively, the connector 520 can be made of plastic and processed using an injection molding process. The hardness of the connector 520 can be greater than that of the housing 320.

The cable assembly 500 also includes a second protective sleeve 550. The second protective sleeve 550 at least partially covers the outer surface of the cable 540. Specifically, the second protective sleeve 550 can cover the outer surface of the portion of the cable 540 located outside the housing 320 and the connector 520. The second protective sleeve 550 can also at least partially cover the outer surface of the connector 520. For example, the second protective sleeve 550 can cover the outer surface of the portion of the connector 520 exposed outside the housing 320. In some embodiments, the second protective sleeve 550 can also at least partially cover the outer surface of the housing 320. For instance, the second protective sleeve 550 can cover the outer surface of the end of the housing 320 connected to the connector 520, i.e., the outer surface of the end of the housing 320 close to the cable assembly 500. The connection between the second protective sleeve 550 and the housing 320 can be sealed with a sealant, the connection between the housing 320 and the cable 540 can be sealed with a sealant, and the connection between the cable 540 and the connector 520 can be encapsulated and sealed by the second protective sleeve 550 during the silicone molding process. Additionally, the connection between the cable 540 and the connector 520 can be filled with a sealant for sealing. This enhances the waterproof performance of the waterproof headphone 001. It should be noted that the second protective sleeve 550 abuts the first protective sleeve 350, meaning the ends of the second protective sleeve 550 and the first protective sleeve 350 that are close to each other are in contact to cover the entire housing 320. The connection between the second protective sleeve 550 and the first protective sleeve 350 is sealed with a sealant. By extending the second protective sleeve 550 toward the main body 300 and having it at least partially cover the outer surface of the housing 320, the waterproof headphone 001 can lengthen the path for external water to enter the interior of the waterproof headphone 001 (e.g., inside the housing 320) from the connection between the cable assembly 500 and the main body 300, thereby increasing resistance to water ingress and enhancing the waterproof effect of the waterproof headphone 001.

The second protective sleeve 550 can be integrally formed or can be assembled from multiple protective covers. The second protective sleeve 550 can be injection-molded onto the outer periphery of the cable 540, or it can be separately injection-molded and then fitted onto the outer periphery of the cable 540. The second protective sleeve 550 can be made of a soft material with a certain degree of elasticity, such as soft silicone, rubber, or the like.

When external water penetrates into the interior of the waterproof headphone 001 (e.g., inside the housing 320), the water ingress path, from the outside inward, sequentially includes the connection between the first protective sleeve 350 and the second protective sleeve 550, the connection between the second protective sleeve 550 and the outer surface of the housing 320, the connection between the housing 320 and the connector 520, and the connection between the cable 540 and the housing 320. To enhance the waterproof effect of the waterproof headphone 001, the water ingress path is filled with sealant. That is, the connection between the first protective sleeve 350 and the second protective sleeve 550, the connection between the second protective sleeve 550 and the housing 320, the connection between the housing 320 and the connector 520, and the connection between the cable 540 and the housing 320 are filled with a sealant. If the connector 520 does not encase the cable 540, the water ingress path, from the outside inward, would sequentially include the connection between the first protective sleeve 350 and the second protective sleeve 550, the connection between the second protective sleeve 550 and the outer surface of the housing 320, and the connection between the housing 320 and the cable 540. The cable 540 is covered with a Teflon protective layer, and Teflon has poor bonding performance. Additionally, when multiple circuits in the waterproof headphone 001 require electrical connection, the cable 540 is configured with multiple strands, and tiny gaps exist between these strands, making it difficult for sealant to effectively seal these gaps. As a result, the bond between the housing 320 and the cable 540 is not strong, increasing the risk of water leakage. By using the connector 520 to encase the cable 540 and replacing the sealing between the housing 320 and the cable 540 with sealing between the housing 320 and the connector 520, the seal is more secure, and the waterproof performance is improved.

In summary, the waterproof headphone 001 encases the cable 540 with the connector 520 and establishes a sealed connection between the connector 520 and the housing 320, replacing the direct connection between the cable 540 and the housing 320. This allows the connector 520 to form a reliable sealed connection with the housing 320, thereby enhancing the waterproof effect of the waterproof headphone 001. Additionally, the connection point between the connector 520 and the housing 320 is located before the connection point between the cable 540 and the housing 320. When external water penetrates into the interior of the waterproof headphone 001, it must first pass through the sealed connection between the connector 520 and the housing 320 before reaching the connection between the cable 540 and the housing 320, providing an additional layer of waterproof protection at the connection between the cable 540 and the housing 320, thus improving the waterproof effect at this junction. Furthermore, by extending the second protective sleeve 550 toward the housing 320 and at least partially covering the outer surface of the housing 320, the waterproof headphone 001 lengthens the water ingress path, thereby increasing resistance to water ingress and enhancing the waterproof effect.

As shown in FIG. 2, the cable assembly 500 can also include an elastic metal wire 560. The elastic metal wire 560 can adopt an arc-shaped design to provide a certain clamping force for the user when wearing the headphone, thereby allowing elastic deformation based on the user's ear shape and head shape to accommodate users with different ear and head shapes. The cable 540 can be arranged along the extension direction of the elastic metal wire 560. For example, the cable 540 can be arranged parallel to the elastic metal wire 560. Alternatively, the cable 540 can be wrapped around the elastic metal wire 560. The elastic metal wire 560 can provide a certain supporting force for the cable 540. For instance, when two core units 100 are electrically connected to two main bodies 300 respectively, the two ends of the elastic metal wire 560 can be connected to the two main bodies 300 respectively. At this time, when the user wears the waterproof headphone 001, the two main bodies 300 can be respectively positioned on the outer sides of the user's ears, the cable assembly 500 can be arranged around the back of the user's head, and the two core units 100 are located near the two ears. In this case, the elastic metal wire 560 can provide a certain clamping force, allowing the two core units 100 to fit closely against the user's skin, thereby enhancing wearing reliability.

In some embodiments, the elastic metal wire 560 can be made of a memory material with excellent deformation recovery capabilities, allowing the cable assembly 500 to return to its original shape even after being deformed by external forces, once the forces are removed. This enables continued use by the user, thereby extending the service life of the waterproof headphone 001. The memory material can include memory alloy materials, polymer memory materials, inorganic non-memory materials, and the like. Furthermore, the memory alloy can include titanium-nickel-copper memory alloy, titanium-nickel-iron memory alloy, titanium-nickel-chromium memory alloy, copper-nickel-based memory alloy, copper-aluminum-based memory alloy, copper-zinc-based memory alloy, iron-based memory alloy, and the like. The polymer memory materials can include polynorbornene, trans-polyisoprene, styrene-butadiene copolymer, cross-linked polyethylene, polyurethane, polylactone, fluorinated polymers, polyamide, cross-linked polyolefins, polyester, and the like. The inorganic non-memory materials can include memory ceramics, memory glass, garnet, mica, and the like. In other embodiments, the elastic metal wire 560 can also be made of non-memory materials. Furthermore, the non-memory materials can include aluminum alloy, chromium-molybdenum steel, scandium alloy, magnesium alloy, titanium alloy, magnesium-lithium alloy, nickel alloy, or combinations thereof.

In some embodiments, the cable assembly 500 may also include a buckle 580. The buckle 580 can be used to connect and secure the connector 520 with the housing 320. Specifically, slots can be provided on the connector 520 and the housing 320. The buckle 580 is simultaneously inserted through the slots of the connector 520 and the housing 320, thereby securing the connector 520 and the housing 320 in fixed connection.

It should be noted that the connector 520 and the housing 320 can be fixedly connected through other methods. For example, adhesive bonding, threaded connection, welding, and so on. This specification does not limit this.

FIG. 3 shows a structural schematic diagram of the connector 520 of the cable assembly 500 according to some exemplary embodiments in this application. Specifically, as shown in FIG. 3, the connector 520 includes a mounting portion 521 and a connection hole 525. In some embodiments, the connector 520 also includes a protruding portion 523. In some embodiments, the connector also includes an insertion hole 527.

The mounting portion 521 is disposed at one end of the connector 520 near the housing 320. The mounting portion 521 is used to connect with the housing 320. The mounting portion 521 is sealingly connected with the housing 320. The shape and dimensions of the mounting portion 521 match the shape and dimensions of the portion of the housing 320 that connects with the mounting portion 521.

In some embodiments, the mounting portion 521 includes a second slot 521-1. The second slot 521-1 matches with the buckle 580. The buckle 580 can be inserted through the second slot 521-1 and the housing 320 to achieve a fixed connection between the mounting portion 521 and the housing 320.

The connector 520 is also provided with a through connection hole 525. The cable 540 can pass through the connection hole 525 and pass through the housing 320 to electrically connect with the electronic component 340. In some embodiments, the aperture of the connection hole 525 is larger than the diameter of the cable 540, so the connection hole 525 can allow the cable 540 to pass through. In some embodiments, the aperture of the connection hole 525 can be equal to or smaller than the diameter of the cable 540 to form an interference fit with the cable 540, so as to further improve the sealing effect.

The protruding portion 523 is disposed at the other end of the connector 520. The protruding portion 523 is a limiting portion when the connector 520 connects with the housing 320. The protruding portion 523 is located at the end of the mounting portion 521 away from the housing 320. The protruding portion 523 protrudes outward relative to the mounting portion 521. When the mounting portion 521 of the connector 520 connects with the housing 320, the housing 320 abuts against the protruding portion 523. The housing 320 and the protruding portion 523 are sealed with sealant to enhance the waterproof effect of the waterproof headphone 001.

In some embodiments, the connector 520 also includes an insertion hole 527. The insertion hole 527 can be a connection interface for the elastic metal wire 560. The elastic metal wire 560 connects with the connector 520 through the insertion hole 527. The elastic metal wire 560 can be inserted into the insertion hole 527 and fixed with the insertion hole 527. The elastic metal wire 560 can be fixed with the insertion hole 527 through various methods. For example, interference fit, adhesive bonding, welding, riveting, heat fusion, or a combination of any of the above methods, etc.

It should be noted that the second protective sleeve 550 can cover/encase the portions of the connector 520 other than the mounting portion 521.

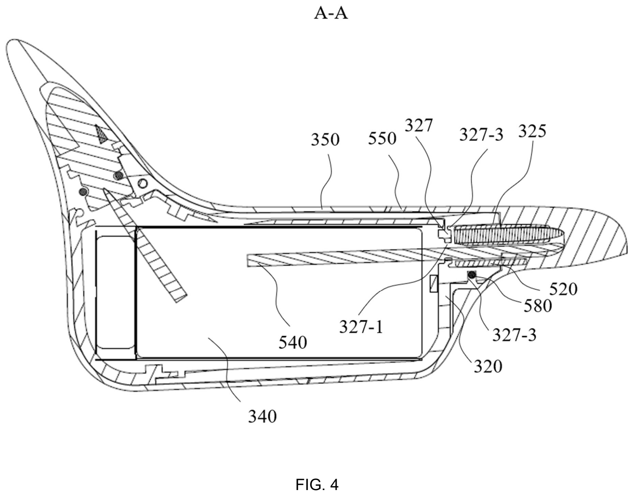

FIG. 4 shows a cross-sectional view A-A of the main body of the waterproof headphone 001 according to FIG. 1A in this application. As shown in FIG. 4, the housing 320 includes a mounting hole 325. In some embodiments, the housing 320 also includes a water blocking portion 327.The housing 320 can be provided with a mounting hole 325. The mounting hole 325 can be disposed on the main housing 321. The mounting hole 325 can be disposed at one end of the main housing 321 near the cable assembly 500. The mounting hole 325 is used for mounting with the connector 520. The shape and dimensions of the mounting hole 325 of the housing 320 and the mounting portion 521 are adapted to each other. The cross-sectional shape of the mounting hole 325 can be any shape, such as circular, quadrilateral, polygonal, elliptical, etc. When the connector 520 connects with the housing 320, the mounting portion 521 is inserted through the mounting hole 325, and the housing 320 can abut against the protruding portion 523. The cable 540 can pass through the through hole 525 of the connector 520, thereby passing through the mounting hole 325 and extending into the interior of the housing 320 to electrically connect with the electronic component 340.

As previously mentioned, in order to enhance the waterproof performance of the waterproof headphone 001, the connection between the housing 320 and the connector 520 is sealed with sealant. Specifically, the mounting portion 521 and the mounting hole 325 are sealed with sealant. Furthermore, the outer surface of the mounting portion 521 and the inner surface of the mounting hole 325 are sealed with sealant. To further enhance the waterproof effect between the mounting portion 521 and the mounting hole 325, at least one third sealant groove is distributed on at least one of the inner surface of the mounting hole 325 and the outer surface of the mounting portion 521. Each third sealant groove of the at least one third sealant groove can surround the mounting portion 521. The third sealant groove can be a groove continuously distributed around the mounting portion 521, or can be multiple grooves distributed at intervals around the mounting portion 521. The at least one third sealant groove is distributed along the axial direction of the mounting portion 521 (i.e., the installation direction of the mounting portion 521 and the mounting hole 325). Each third sealant groove is filled with sealant to increase the volume of sealant between the mounting portion 521 and the mounting hole 325, thereby enhancing the waterproof performance between the mounting portion 521 and the mounting hole 325. The at least one third sealant groove can be any number such as 1, 2, 3, 5, 7, etc., which is not limited herein. It should be noted that when the sealant filled between the mounting portion 521 and the mounting hole 325 overflows along the installation direction, the third sealant groove can be considered to be filled with sealant.

The sealant between the mounting portion 521 and the mounting hole 325 can not only achieve sealing between the mounting portion 521 and the mounting hole 325, but can also achieve fixed connection between the mounting portion 521 and the mounting hole 325. Adhesive quality affects the sealing performance of the sealant. When the sealant falls off due to poor adhesion, the sealing effect of the sealant may also fail. Adhesion can be achieved between the outer surface of the mounting portion 521 and the inner surface of the mounting hole 325 through sealant. The adhesive quality between the outer surface of the mounting portion 521 and the inner surface of the mounting hole 325 can be achieved by measuring adhesive strength. Among these, adhesive strength is the stress required when the sealant adhesive system is damaged. The magnitude of adhesive strength depends on factors such as the mechanical properties of the adhesive, the adhesion process, the roughness of the inner surface of the mounting hole 325, and the roughness of the outer surface of the mounting portion 521. If the roughness value is too large, it will cause excessive surface gaps, making it difficult for the sealant to fill the gaps, resulting in low adhesive strength and poor sealing effect. When the roughness is too small, it will cause the contact area between the sealant and the object surface to decrease, and it will be difficult for the sealant to combine with the object surface, thereby reducing adhesive strength. Therefore, controlling the surface roughness within a reasonable range can increase the contact range between the object surface and the sealant, thereby increasing adhesive strength and further enhancing the sealing effect of the sealant. Therefore, the roughness of the inner surface of the mounting hole 325 and the outer surface of the mounting portion 521 can be greater than a preset first threshold. The first threshold includes the minimum roughness value required for firm adhesion of the sealant. In some embodiments, the surface roughness value for firm sealant adhesion can be a roughness range. In this case, the roughness of the inner surface of the mounting hole 325 and the outer surface of the mounting portion 521 can be within the roughness range.

The first threshold can be determined through the required adhesive strength of the outer surface of the mounting portion 521 and the inner surface of the mounting hole 325, the mechanical properties of the adhesive, and the adhesion process. In some embodiments, the first threshold can be obtained through experimental methods. In some embodiments, the first threshold can be obtained through statistical methods. In some embodiments, the first threshold can be obtained through empirical value selection methods.

In some embodiments, the first threshold can be obtained through experimental methods. Furthermore, when the mounting hole 325 and the mounting portion 521 are assembled and bonded with sealant, the first threshold can be indirectly measured through airtightness. Specifically, using the waterproof headphone 001 as a whole as a sample, a certain pressure is applied and pressure changes are monitored. The degree of leakage can be accurately measured through an airtightness detector to provide accurate results without damaging the product. In some embodiments, when the mounting hole 325 and the mounting portion 521 are assembled and bonded with sealant, the first threshold can be tested through a positive pressure method. Specifically, using the waterproof headphone 001 as a whole as a sample, it is placed in a sealed cavity. The sealed cavity is divided into upper and lower layers, with the upper layer being air and the lower layer being water. When the sample is placed in the sealed cavity, it is first placed in the upper layer of the sealed cavity, and a certain air pressure (for example, 300 KPa) is applied to the upper layer, then it is immersed in water, and the upper layer air pressure is released. At this time, if the product has a leak point, the internal air pressure of the product is high, and air bubbles will emerge from the water. If the product has no leak point, no bubbles will emerge, thereby determining the overall sealing performance of the sample.

In some embodiments, when the mounting hole 325 and the mounting portion 521 are assembled and bonded with sealant, the first threshold can be determined by directly immersing the waterproof headphone 001 in water and disassembling it to confirm whether water ingress has occurred.

In some embodiments, the first threshold can be obtained through statistical methods. Furthermore, when the mounting hole 325 and the mounting portion 521 are assembled and bonded with sealant, the first threshold can be determined by setting multiple mounting portions 521 and mounting holes 325 with different roughness values, measuring adhesive strength multiple times, and then determining the first threshold required for firm sealant adhesion. Specifically, within the sampling length, the stress required when the sealant adhesive system at the bonding parts of multiple mounting portions 521 and mounting holes 325 with different roughness values is damaged is measured respectively. By comparing the stress and taking the roughness value at the growth inflection point as the first threshold. Among these, the sampling length is a segment length selected based on the actual surface formation and texture characteristics of the inner surface of the mounting hole 325 and the outer surface of the mounting portion 521, which can reflect the surface roughness characteristics. When measuring the sampling length, it is done according to the actual water flow direction after water ingress. For example, the sampling length can be selected at 3-5 cm from the end away from the housing 320. The sample is the cut section that has been removed.

In some embodiments, the first threshold can be obtained through empirical value selection methods. Furthermore, the first threshold between the mounting hole 325 and the mounting portion 521 can be inferred through factors such as machining precision, adhesive bonding force of the adhesive, and contact area. A person skilled in the art should understand that other measurement methods for the first threshold are also within the protection scope of this specification.

In some embodiments, the mounting hole 325 can also include a first slot. The buckle 580 is inserted through the first slot and the second slot 521-1, thereby achieving connection between the connector 520 and the housing 320 and enhancing the connection strength between the connector 520 and the housing 320.

The housing 320 also includes a water blocking portion 327. The water blocking portion 327 is located at the end of the mounting hole 325 and is spaced apart from the end of the connector 520. For example, the water blocking portion 327 is located at the end of the mounting hole 325 on the side away from the connector 520, and is spaced apart from the end of the mounting portion 521 of the connector 520. The water blocking portion 327 protrudes toward the center of the mounting hole 325 relative to the mounting hole 325. The water blocking portion 327 is provided with a through hole 327-1. After the cable 540 passes through the connection hole 525, it passes through the through hole 327-1 and enters the interior of the housing 320 to achieve electrical connection with the electronic component 340. In some embodiments, the cable 540 and the through hole 327-1 are sealed with sealant to reinforce the connection between the cable 540 and the through hole 327-1 and improve the waterproof performance of the waterproof headphone 001.

In some embodiments, sealant is filled between the water blocking portion 327 and the mounting portion 521. The sealant between the water blocking portion 327 and the mounting portion 521 surrounds the portion of the cable 540 located between the mounting portion 521 and the water blocking portion 327, thereby preventing external water from entering the interior of the housing 320 through the gap between the cable 540 and the through hole 327-1 at the connection between the water blocking portion 327 and the mounting portion 521. As previously mentioned, the water ingress path includes the connection between the connector 520 and the housing 320. Specifically, the connection between the connector 520 and the housing 320 can include the connection between the mounting portion 521 and the mounting hole 325, and the connection between the water blocking portion 327 and the mounting portion 521. The sealant between the water blocking portion 327 and the mounting portion 521 extends the water ingress path located at the connection between the connector 520 and the housing 320, thereby improving the waterproof performance at the connection between the connector 520 and the housing 320.

In some embodiments, at least one first sealant groove 327-3 is distributed on the side of the water blocking portion 327 facing the mounting portion 521. The at least one first sealant groove 327-3 is filled with sealant. Each first sealant groove 327-3 of the at least one first sealant groove 327-3 can be arranged around the through hole 327-1. The first sealant groove 327-3 can be a groove continuously distributed around the through hole 327-1, or can be multiple grooves distributed at intervals around the through hole 327-1. Each first sealant groove 327-3 is filled with sealant to increase the volume of sealant between the water blocking portion 327 and the mounting portion 521, thereby improving the waterproof performance between the water blocking portion 327 and the mounting portion 521. The at least one first sealant groove 327-3 can be distributed along the radial direction of the through hole 327-1. The at least one first sealant groove 327-3 can be any number such as 1, 2, 3, 5, 7, etc., which is not limited herein. It should be noted that when the sealant filled between the water blocking portion 327 and the mounting portion 521 overflows along the installation direction, the third sealant groove can be considered to be filled with sealant.

As previously mentioned, when the connector 520 is installed with the housing 320, the housing 320 can abut against the protruding portion 523 of the connector 520. Specifically, the end of the housing 320 can abut against the protruding portion 523. Sealant is filled between the housing 320 and the protruding portion 523 to achieve a sealed connection. As previously mentioned, the water ingress path includes the connection between the connector 520 and the housing 320. Specifically, the connection between the connector 520 and the housing 320 can also include the connection between the housing 320 and the protruding portion 523. The sealant between the housing 320 and the protruding portion 523 extends the water ingress path located at the connection between the connector 520 and the housing 320, thereby improving the waterproof performance at the connection between the connector 520 and the housing 320.

In some embodiments, in order to further enhance the waterproof performance at the connection between the housing 320 and the protruding portion 523, the protruding portion 523 can be provided with a boss. The boss protrudes toward the housing 320. Correspondingly, the end of the housing 320 facing the protruding portion 523 can be provided with a recess. The shape, dimensions, and position of the recess match with the boss. When the connector 520 connects with the housing 320, the end of the housing 320 abuts against the protruding portion 523, while the boss is inserted into the recess. It should be noted that in some embodiments, the boss can be provided at the end of the housing 320 facing the protruding portion 523, and the recess can be provided at the end of the protruding portion 523 facing the housing 320. As previously mentioned, sealant is filled between the housing 320 and the protruding portion 523 to achieve a sealed connection. At this time, sealant is also filled between the boss and the recess to achieve a sealed connection. The structure of the boss and recess can increase the connection area between the housing 320 and the protruding portion 523, thereby extending the length of the water ingress path at the connection between the housing 320 and the protruding portion 523, thus increasing water ingress resistance and further enhancing the waterproof performance at the connection between the housing 320 and the protruding portion 523.

In some embodiments, in order to further enhance the waterproof performance at the connection between the housing 320 and the protruding portion 523, at least one second sealant groove is distributed on the side of the protruding portion 523 facing the housing 320. Each second sealant groove of the at least one second sealant groove surrounds the mounting portion 521. The second sealant groove can be a groove continuously distributed around the mounting portion 521, or can be multiple grooves distributed at intervals around the mounting portion 521. Each second sealant groove is filled with sealant to increase the volume of sealant between the housing 320 and the protruding portion 523, thereby enhancing the waterproof performance between the housing 320 and the protruding portion 523. The at least one second sealant groove can be distributed along the radial direction of the mounting portion 521. The at least one second sealant groove can be any number such as 1, 2, 3, 5, 7, etc., which is not limited herein. It should be noted that when the sealant filled between the housing 320 and the protruding portion 523 overflows along the installation direction, the third sealant groove can be considered to be filled with sealant.

It can be seen that the water ingress path located at the connection between the housing 320 and the connector 520 includes, from outside to inside in sequence: the connection between the protruding portion 523 and the end of the housing 320, the connection between the mounting portion 521 and the mounting hole 325, and the connection between the water blocking portion 327 and the end of the mounting portion 521. At the same time, the directions of the water ingress paths at the above three connections are different. Therefore, by filling sealant at the connection between the housing 320 and the connector 520, the waterproof headphone 001 further extends the length of the water ingress path while changing the direction of the water ingress path, thereby increasing water ingress resistance and enhancing the waterproof performance of the waterproof headphone 001.

When the outer surface of the housing 320 is covered by the first protective sleeve 350 and the second protective sleeve 550, the first protective sleeve 350 and the second protective sleeve 550 abut against each other, and the connection is sealed with sealant. As previously mentioned, the adhesive strength between the outer surface of the housing 320 and the first protective sleeve 350 as well as the second protective sleeve 550 may affect the sealing performance of the sealant between the outer surface of the housing 320 and the first protective sleeve 350 as well as the second protective sleeve 550. Therefore, in order to enhance the sealing performance between the outer surface of the housing 320 and the first protective sleeve 350 as well as the second protective sleeve 550, the roughness of the outer surface of the housing 320 is greater than the aforementioned first threshold. The measurement methods for the first threshold and the roughness of the outer surface of the housing 320 will not be repeated herein.

The length of the second protective sleeve 550 covering the housing 320 can be any length. In some embodiments, the length of the second protective sleeve 550 covering the housing 320 is greater than the connection length between the mounting hole 325 and the mounting portion 521, so as to extend the length of the second protective sleeve 550 covering the outer surface of the housing 320, thereby extending the water ingress path and increasing water ingress resistance to further enhance waterproof performance.

The sealant used for the above-mentioned bonding includes instant adhesive (such as 502 glue), epoxy resin bonding, anaerobic adhesive, UV adhesive (ultraviolet light-curing type), hot melt adhesive, pressure-sensitive adhesive, latex, etc.

In summary, the waterproof electronic device provided in this specification wraps the cable 540 by setting the connector 520, and replaces the direct connection between the cable 540 and the housing 320 with a sealed connection between the connector 520 and the housing 320, so that the connector 520 can achieve a reliable sealed connection with the housing 320, thereby enhancing the waterproof effect of the waterproof headphone 001. Moreover, the connection position between the connector 520 and the housing 320 is located before the connection position between the cable 540 and the housing 320. When external water penetrates into the interior of the waterproof headphone 001, it must first pass through the sealed connection between the connector 520 and the housing 320 before reaching the connection between the cable 540 and the housing 320, thereby increasing the waterproof protection at the connection between the cable 540 and the housing 320 and enhancing the waterproof effect at the connection between the cable 540 and the housing 320. At the same time, the waterproof headphone 001 extends the second protective sleeve 550 toward the housing 320 and at least partially covers the outer surface of the housing 320, so that the water ingress path is extended, thereby increasing water ingress resistance and enhancing the waterproof effect.

The above has described specific embodiments of this specification. Other embodiments are within the scope of the appended claims. In some cases, the actions or steps recorded in the claims can be executed in a different order than in the embodiments and still achieve the desired results. Additionally, the processes depicted in the drawings do not necessarily require the specific order or sequential order shown to achieve the desired results. In certain implementations, multitasking and parallel processing are also possible or potentially advantageous.

In summary, after reading this detailed disclosure, a person skilled in the art can understand that the foregoing detailed disclosure can be presented only by way of example and may not be limiting. Although not explicitly stated here, a person skilled in the art can understand that this specification encompasses various reasonable changes, improvements and modifications to the embodiments. These changes, improvements and modifications are intended to be suggested by this specification and are within the spirit and scope of the exemplary embodiments of this specification.

Furthermore, certain terms in this specification have been used to describe the embodiments of this specification. For example, "one embodiment," "embodiment," and/or "some embodiments" means that specific features, structures or characteristics described in conjunction with that embodiment may be included in at least one embodiment of this specification. Therefore, it can be emphasized and should be understood that two or more references to "embodiment" or "one embodiment" or "alternative embodiment" in various parts of this specification do not necessarily all refer to the same embodiment. Furthermore, specific features, structures or characteristics may be appropriately combined in one or more embodiments of this specification.

It should be understood that in the foregoing description of the embodiments of this specification, in order to help understand one feature and for the purpose of simplifying this specification, this specification combines various features in a single embodiment, drawing, or description thereof. However, this does not mean that the combination of these features is necessary, and a person skilled in the art may fully extract some of these features as separate embodiments to understand when reading this specification. That is to say, the embodiments in this specification can also be understood as the integration of multiple sub-embodiments. And the content of each sub-embodiment is also valid when it contains fewer than all the features of a single aforementioned disclosed embodiment.

Each patent, patent application, publication of a patent application, and other materials, such as articles, books, specifications, publications, documents, articles, etc., cited herein, except for any historical prosecution documents to which it relates, which may be inconsistent with or any identities that conflict, or any identities that may have a restrictive effect on the broadest scope of the claims, are hereby incorporated by reference for all purposes now or hereafter associated with this document. Furthermore, in the event of any inconsistency or conflict between the description, definition, and/or use of a term associated with any contained material, the term used in this document shall prevail.

Finally, it should be understood that the implementation schemes of the application disclosed herein are illustrations of the principles of the implementation schemes of this specification. Other modified embodiments are also within the scope of this specification. Therefore, the embodiments disclosed in this specification are merely examples and not limitations. A person skilled in the art can adopt alternative configurations based on the embodiments in this specification to implement the applications in this specification. Therefore, the embodiments of this specification are not limited to the embodiments that have been precisely described in the application.

## Claims

1. A waterproof electronic device, **characterized in that** the device comprises:
a main body, comprising:
a housing, comprising a mounting hole,
an electronic component, installed within the housing, and
a first protective sleeve, at least partially covering an outer surface of the housing; and
a cable assembly, comprising:
a connector, comprising a mounting portion at an end, the mounting portion being inserted through the mounting hole to connect with the housing, the connector comprising a through connection hole,
a cable, passing through the connection hole to connect with the electronic component, and
a second protective sleeve, at least partially covering the cable and an outer surface of the connector, and at least partially covering the outer surface of the housing to abut against the first protective sleeve, the connector being partially covered by the second protective sleeve and partially covered by the housing,
wherein sealing connections are respectively provided at a connection between the second protective sleeve and the first protective sleeve, between the second protective sleeve and the connector, between the second protective sleeve and the housing, between the first protective sleeve and the housing, and between the mounting hole of the housing and the mounting portion of the connector.

2. The waterproof electronic device according to claim 1, **characterized in that** a length of the second protective sleeve covering the housing is greater than a length of a connection between the mounting hole and the mounting portion.

3. The waterproof electronic device according to claim 1 or 2, **characterized in that** the housing further comprises a water blocking portion, the water blocking portion is located at an end of the mounting hole and is spaced apart from the mounting portion, a side of the water blocking portion facing the mounting portion comprises at least one first sealant groove, and a sealant fills between the water blocking portion and the mounting portion,
wherein the water blocking portion comprises a through hole, the cable passes through the through hole to connect with the electronic component after passing out from the connection hole, and the sealant between the water blocking portion and the mounting portion surrounds a portion of the cable located between the mounting portion and the water blocking portion.

4. The waterproof electronic device according to claim 3, **characterized in that** each first sealant groove of the at least one first sealant groove is arranged around the through hole, and the at least one first sealant groove is distributed along a radial direction of the through hole.

5. The waterproof electronic device according to any one of claims 1-4, **characterized in that** a roughness of the outer surface of the housing is greater than a preset first threshold, and the first threshold comprises a minimum roughness value required for secure adhesion of a/the sealant.

6. The waterproof electronic device according to any one of claims 1-5, **characterized in that** a roughness of an inner surface of the mounting hole and a roughness of an outer surface of the mounting portion are greater than a/the preset first threshold, and the first threshold comprises a/the minimum roughness value required for secure adhesion of a/the sealant.

7. The waterproof electronic device according to any one of claims 1-6, **characterized in that** the connector further comprises a protruding portion located at an end of the mounting portion away from the housing, the protruding portion protrudes outward relative to the mounting portion, when the connector is connected with the housing, the housing abuts against the protruding portion so as to seal between the housing and the protruding portion with a/the sealant.

8. The waterproof electronic device according to claim 7, **characterized in that** the protruding portion comprises a boss, the boss protrudes in a direction towards the housing, an end of the housing close to the protruding portion comprises a recess, and the boss is inserted into the recess.

9. The waterproof electronic device according to claim 7 or 8, **characterized in that** a side of the protruding portion facing the housing comprises at least one second sealant groove, each second sealant groove of the at least one second sealant groove surrounds the mounting portion, and the at least one second sealant groove is distributed along a radial direction of the mounting portion.

10. The waterproof electronic device according to any one of claims 1-9, **characterized in that** at least one of an/the inner surface of the mounting hole and an/the outer surface of the mounting portion comprises at least one third sealant groove, each third sealant groove of the at least one third sealant groove surrounds the mounting portion, and the at least one third sealant groove is distributed along an axial direction of the mounting portion.

11. The waterproof electronic device according to any one of claims 1-10, **characterized in that** a material of the connector is zinc metal.
